Europäisches Patentamt

European Patent Office

Office européen des brevets

(19)

(11) EP 0 784 414 A1

(12) DEMANDE DE BREVET EUROPEEN

(43) Date de publication:
16.07.1997 Bulletin 1997/29

(51) Int Cl.6: H04Q 11/04, H04L 12/56

(21) Numéro de dépôt: 97200030.1

(22) Date de dépôt: 07.01.1997

(84) Etats contractants désignés:
DE FR GB

(30) Priorité: 10.01.1996 FR 9600214

(71) Demandeur: Philips Electronics N.V.
5621 BA Eindhoven (NL)

(72) Inventeurs:
• Gauthier, Jean-Pierre
75008 Paris (FR)

• Tibi, Georges
75008 Paris (FR)

(74) Mandataire: Chaffraix, Jean
Société Civile S.P.I.D.
156, Boulevard Haussmann
75008 Paris (FR)

(54) Réseau A.T.M. et dispositif de multiplexage convenant à un tel réseau

(57) Ce système est formé :

- d'un réseau A.T.M. (100),
- et d'un dispositif de multiplexage (160) comportant :

. des bornes d'accès ($180_i$) pour des cellules à transmettre définies par un identificateur de connexion sur une borne de raccord (170),
. des circuits de service ($200_i$) munis :

. d'organes-tampons ($201_i$) pour des cellules affectées d'un même identificateur, ayant une commande d'émission desdites cellules,

. un circuit d'affectation (300) pour agir sur ladite commande.

Ce circuit (300) comprend :

. des moyens (385) pour établir des dates-butées pour chaque cellule à transmettre selon ledit identificateur,
. une table (392) pour emmagasiner des identificateurs selon un espace d'adressage fonction de dates-butées,
. un dispositif d'arborescence (394) dont le nombre de feuilles correspond audit espace d'adressage pour emmagasiner un élément d'activation qui détermine la présence d'identificateur dans ledit espace,
. un circuit d'insertion-recherche pour insérer et fournir un identificateur en opérant sur ledit dispositif.

Application : transmission A.T.M.

FIG.4

**Description**

La présente invention concerne un système de communication formé d'au moins un réseau du genre A.T.M., notamment, qui transmet d'un de ses points d'accès à un autre des cellules d'informations comportant un identificateur de destination définissant des connexions entre deux desdits points d'accès et d'au moins un dispositif de multiplexage comportant :

- une pluralité de bornes d'accès pour des utilisateurs ayant des cellules à transmettre, avec un certain débit, sur une certaine connexion,
- au moins une borne de raccord pour au moins un point d'accès dudit réseau,
- une pluralité de circuits de service affectés aux bornes d'accès, munis ;

  • d'organes-tampons pour emmagasiner les cellules d'utilisateur pour une connexion,
  • d'une commande d'émission de cellules pour rendre disponibles, sur des sorties de cellules, les cellules emmagasinées,

- un circuit d'affectation pour déterminer la fourniture, à ladite borne de raccord, d'au moins une cellule.

La présente invention concerne aussi un dispositif de multiplexage convenant à un tel système.

Un tel système est décrit dans le document de brevet déposé en France par la demanderesse sous le numéro 95 12 582 le 25 octobre 1995.

Ce système connu comporte un circuit d'affectation dans lequel sont fournis des identificateurs de connexion par paquets. Pour étaler ces paquets, on utilise un circuit d'attribution pour qu'une seule cellule soit émise par temps cellule.

La présente invention propose un système du genre cité dans le préambule qui comporte un circuit d'affectation particulièrement performant.

Pour cela, un tel système est remarquable en ce que le circuit d'affectation comporte en outre :

- des moyens pour établir des dates-butées pour chaque cellule à transmettre définie par un identificateur de connexion à partir desdites exigences,
- une table pour emmagasiner des identificateurs de connexion éventuellement chaînés, selon un espace d'adressage fonction de date-butées,
- un dispositif d'arborescence dont le nombre de feuilles correspond à l'espace d'adressage de ladite table pour emmagasiner un élément d'activation pour déterminer la présence d'identificateur pour tout l'espace d'adressage de ladite table,
- un circuit d'insertion pour insérer un identificatuer de connexion,
- un circuit de recherche pour fournir l'adresse du ou des identificateurs de connexion en opérant sur le dispositif d'arborescence.

La description suivante faite en regard des dessins ci-annexés, le tout donné à titre d'exemple non limitatif, fera bien comprendre comment l'invention peut être réalisée.

La figure 1 montre un réseau sur lequel est connecté un dispositif de multiplexage conforme à l'invention.

La figure 2 montre la structure des cellules d'information transmises par le réseau.

La figure 3 montre un dispositif de multiplexage conforme à l'invention.

La figure 4 montre la structure d'un circuit d'affectation faisant partie du dispositif de la figure 3.

La figure 5 montre les relations entre un dispositif d'arborescence et une table de dates-butées faisant partie du dispositif de la figure 3.

La figure 6 montre comment s'organise le dispositif d'arborescence en fonction de la présence d'identificateur de connexion.

La figure 7 montre la structure du dispositif d'arborescence relativement à une insertion.

La figure 8 est un schéma pour montrer les dates passées et les dates futures.

La figure 9 montre la structure du dispositif d'arborescence relativement à une recherche.

La figure 10 est un schéma pour l'explication du fonctionnement du dispositif d'arborescence.

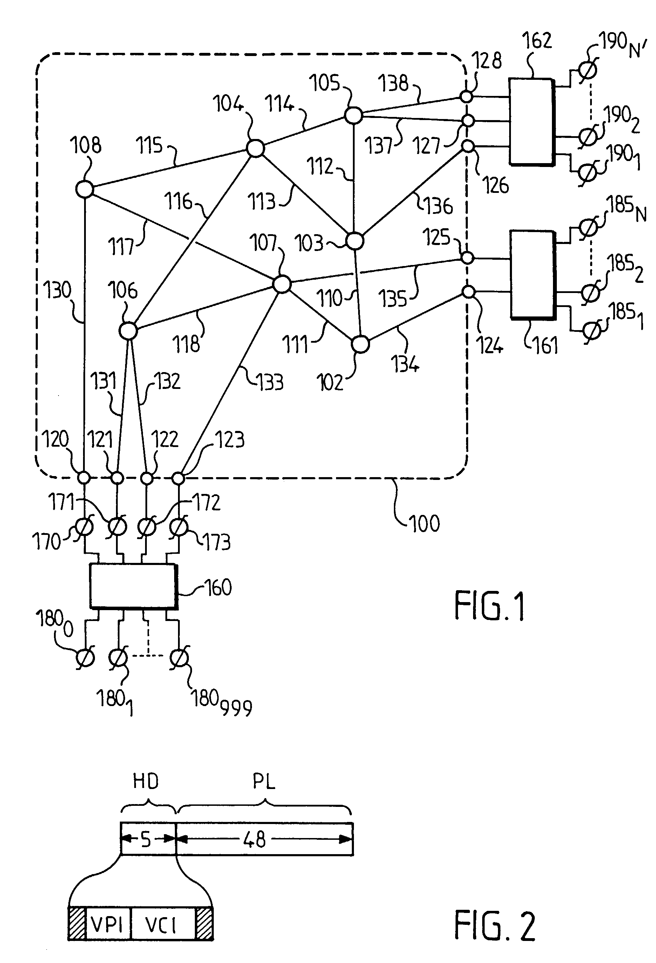

La figure 1 montre d'une manière schématisée un réseau A.T.M. portant sur la figure la référence 100. On trouvera une description de ce réseau dans l'ouvrage : "ASYNCHRONOUS TRANSFER MODE " de Martin de PRYCKER paru en 1991 aux éditions ELLIS HORWOOD en Angleterre. Ce réseau est constitué de différents noeuds 102, 103, 104, 105, 106, 107 et 108 reliés entre eux par des liaisons 110 à 118 pour relier respectivement les noeuds 102-103, 102-107, 103-105, 103-104, 104-105, 104-108, 104-106, 107-108 et 106-107. On a repéré par 120 à 128 différents points d'accès de ce réseau. Ces points d'accès sont respectivement reliés aux noeuds 108, 106, 106, 107, 102, 107, 103, 105 et 105 par l'intermédiaire de liaisons 130 à 138 respectivement. A ces points d'accès, se connectent différents dispositifs de multiplexage et de démultiplexage 160, 161 et 162. Parmi ces dispositifs, il faut distinguer : un dispositif de multiplexage 160, faisant partie de la présente invention, et deux dispositifs de démultiplexage 161 et 162 qui effectuent les opérations inverses de celles du dispositif 160 et qui font partie du système de l'invention. On trouvera dans le document de brevet EP n° 0 632 669 déposé le 23 juin 1994 une description de tels dispositifs de démultiplexage. Pour être relié aux quatre points 120, 121, 122 et 123, le dispositif de multiplexage 160 est muni de quatre bornes de raccord 170, 171, 172 et 173. Ainsi les informations peuvent, dans le cadre de cet exemple décrit, aller du dispositif 160 vers les dispositifs 161 et 162 en transitant par le réseau 100. Ces informations à transmettre sont appliquées à une pluralité de bornes d'accès $180_0$ à $180_{999}$ dont est pourvu le dispositif de multiplexage 160, et peuvent être fournies, entre autres, à des bornes de sortie $185_1$ à $185_N$ du dispositif 161 et $190_1$ à $190_N$, du dispositif 162. L'ordre de grandeur de N et N' est du millier. Les informations transmises dans le réseau se présentent sous forme de cellules dont l'allure est montrée à la figure 2. Ces cellules sont formées de 53 octets : 5 constituent l'entête HD et les 48 autres référencés par PL contiennent les données pour un service à transmettre. Dans l'entête, on distingue deux codes VPI et VCI correspondant respectivement à des identificateurs de chemin virtuel et de circuit virtuel. Les identificateurs de chemin sont plutôt traités par l'opérateur de transmission et l'identificateur de circuit virtuel par l'utilisateur.

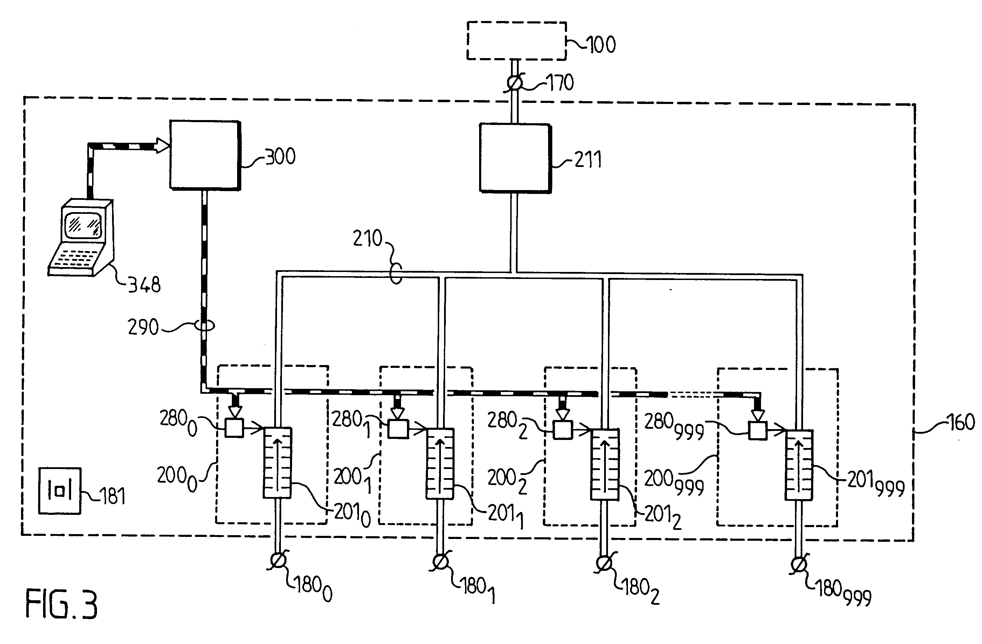

La figure 3 montre un schéma du dispositif de multiplexage 160. Sur cette figure, on s'intéresse seulement, pour simplifier l'exposé, aux cellules à fournir à la seule borne 170 à partir d'informations provenant des bornes d'accès $180_0$ à $180_{999}$ selon une cadence de temps-cellule définie par une période Tc de signaux élaborés par une horloge-mère 181.

Chacune de ces bornes $180_0$ à $180_{999}$ reçoit des cellules ayant les mêmes identificateurs et les mêmes contraintes de trafic. L'indice i ($0 \leq i \leq 999$) détermine l'indice des accès $180_0$ à $180_{999}$. Les cellules sont emmagasinées respectivement dans des organes de file d'attente $200_0$ à $200_{999}$. Ces différents organes $200_0$ à $200_{999}$ sont constitués à partir d'une mémoire de type FIFO $201_0$ à $201_{999}$ respectivement. Ces mémoires restituent à leur sortie les données dans l'ordre où elles ont été entrées. Un code de reconnaissance "i" à identifier à l'indice précité est affecté à chacun de ces organes $200_0$ à $200_{999}$. Une ligne commune de données 210 connecte la sortie des organes de file d'attente à la borne 170, via un circuit de sortie 211 qui est un simple circuit pour l'adaptation des signaux sur cette borne 170.

Les organes de file d'attente $200_0$ à $200_{999}$ sont aussi pourvus d'organes d'autorisation d'émettre que l'on a fait figurer respectivement sous forme d'un organe décodeur $280_0$ à $280_{999}$. Les entrées de ces organes décodeurs sont reliées à une troisième ligne commune 290 qui interconnecte tous les organes de file d'attente $200_0$ à $200_{999}$. Le code de reconnaissance, appelé aussi identificateur de connexion, "i" ($0 \leq i \leq 999$), peut être détecté au niveau de chacun de ces organes $200_0$ à $200_{999}$. La succession d'un même identificateur de connexion sur la ligne 290 définit ainsi un canal de transmission et son occurrence, la capacité ou la largeur de bande de ce canal.

Un circuit d'affectation 300 fournit sur cette dernière ligne 290 le code de reconnaissance pour autoriser l'organe de file d'attente, concerné par ce code, à émettre une cellule dite cellule élue. Pas plus d'une cellule ne peut être émise par temps-cellule. Le circuit d'affectation 300 est géré au moyen d'un organe de gestion présenté sous la forme d'un terminal informatique 348.

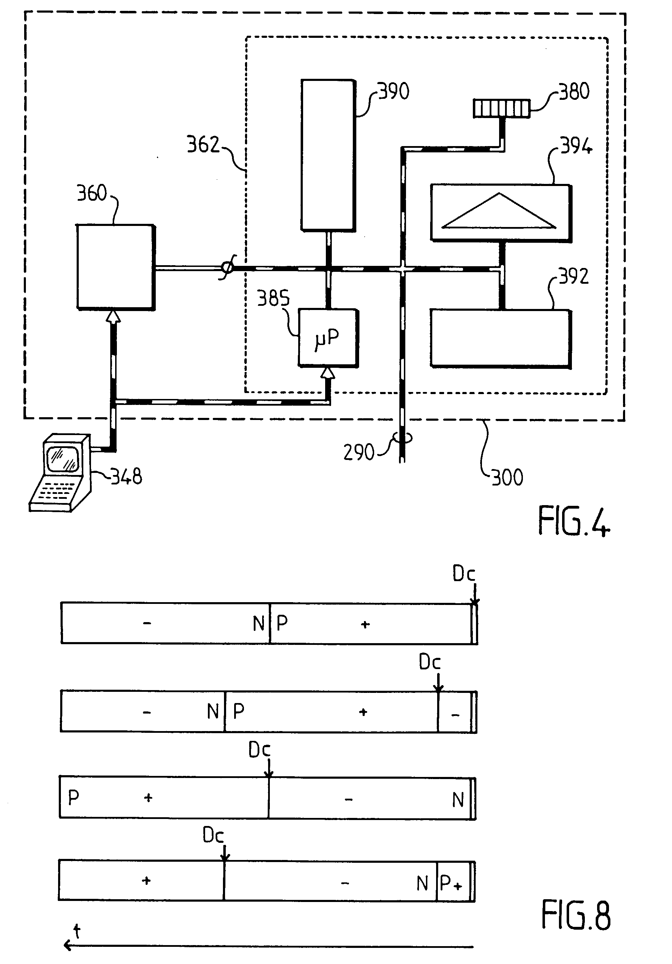

La figure 4 montre la structure du circuit 300. Il se compose d'un dispositif d'espacement 360 dont la structure peut être celle décrite dans la demande de brevet 95 12582 précitée et d'un dispositif de lissage de gigue 362. Comme indiqué dans cette demande de brevet le dispositif 360 peut fournir un certain nombre d'identificateurs de cellules éligibles par temps-cellule. Le dispositif de lissage 362 fournit l'identificateur de cellule élue pour un temps cellule. Ce dispositif 362 implique la présence d'un compteur de date 380 qui donne continûment une date courante modulo N. Pour fixer les idées, N = 4096. Le compteur de date évolue au rythme du temps-cellule Tc. Un calculateur 385 assure la gestion de ce dispositif de lissage 362 qui comporte en outre une table de descripteurs de canaux 390 indexée par le numéro du canal, une table de dates butées 392 et selon un aspect important de l'invention un dispositif d'arborescence 394. Ces différents éléments seront plus explicités dans le présent mémoire.

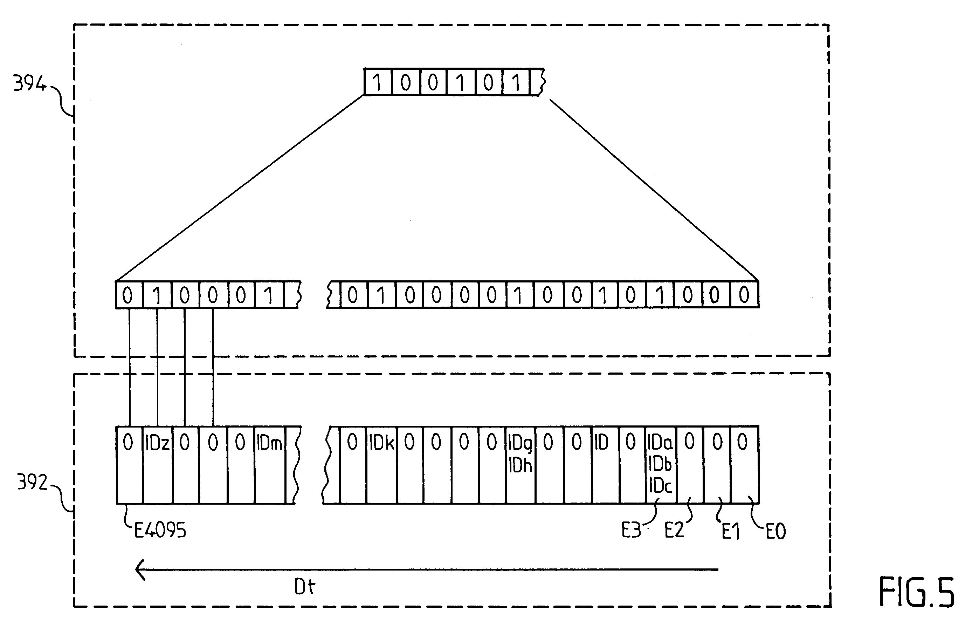

La figure 5 montre les relations établies par les mesures de l'invention entre le dispositif d'arborescence 394 et la table de dates-butées 392. La table de dates-butées est munie d'un espace d'adressage (E0 à E4095) correspondant à la capacité du compteur-date 380. Chaque emplacement de cette table peut être assimilé à une date. On notera que les dates évoluent de la droite vers la gauche comme indiqué par la flèche. Dans chacun de ces emplacements, on trouve un ou plusieurs indentificateurs de connexions par exemple à l'emplacement repéré sur la figure 5, par E3, on trouve 3 identificateurs IDa, IDb et IDc qui sont donc chaînés. Chaque élément de la table est adressé en un temps cellule Tc. La présence d'un ID dans un élément de cette table ne signifie pas que cet ID devient éligible à la date définie par l'élément qui le contient (date minimale d'élection) mais qu'il devra être élu dans le pire cas à cette date (date maximale d'élection). La présente invention propose une recherche particulièrement efficace d'un élément dans cette table. On prend ici l'exemple d'une table permettant la gestion de canaux ayant un débit minimum de 1/2048 du débit maximal représenté par une cellule à chaque temps Tc et des périodes butées systématiquement égales à l'espace inter-cellules. Si la somme des débits est inférieure au débit total, un canal ne peut théoriquement être élu à sa date butée ou après sa date butée. Néanmoins ici, par sécurité, on utilise 50 % des entrées de la table pour les dates futures et le reste pour les dates passées, la taille de la table est de 4096 entrées soit : $2^{12}$.

L'arbre du dispositif d'arborescence 394 permet une recherche rapide pour trouver dans la table des dates-butées 392 le canal qui a la date la plus petite. A chaque élément de cette table on associe, à la base de l'arbre, un bit, par exemple un bit de valeur "1" représentant l'occupation de l'élément de la table (occupé/libre). A son niveau supérieur, on associe un bit à un groupe de bits du niveau inférieur. Ce bit marque l'occupation d'un ou plusieurs bits de son groupe du niveau inférieur.

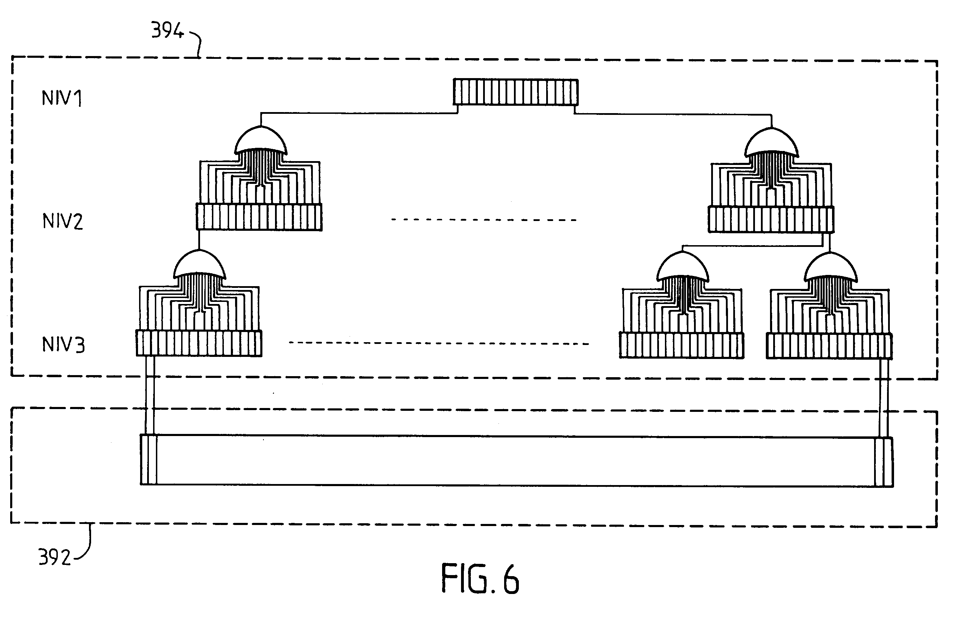

L'opération est simplement le OU logique, comme ceci est montré à la figure 6. On superpose ainsi 3 niveaux NIV1, NIV2 et NIV3. Dans le cadre de l'exemple décrit, le niveau NIV3 comporte 256 registres pour faire chacun des groupements de 16 bits, le niveau NIV2 comporte lui 16 registres de 16 bits et le niveau NIV1, qui est la racine ne comporte qu'un seul de ces registres. Il est bien évident, sans pour cela sortir du cadre de l'invention, d'utiliser des groupements de valeurs différentes et que le nombre de bits associé à un groupement n'est pas nécessairement identique à chaque niveau.

Dans le cas illustré de la figure 6, on effectue donc des opérations "OU logique" sur tous les registres des niveaux NIV3 et NIV2, de sorte que chaque position d'un registre est chargée par le OU logique de 16 autres registres de niveau inférieur.

## DESCRIPTION DU DISPOSITIF D'ARBORESCENCE 394.

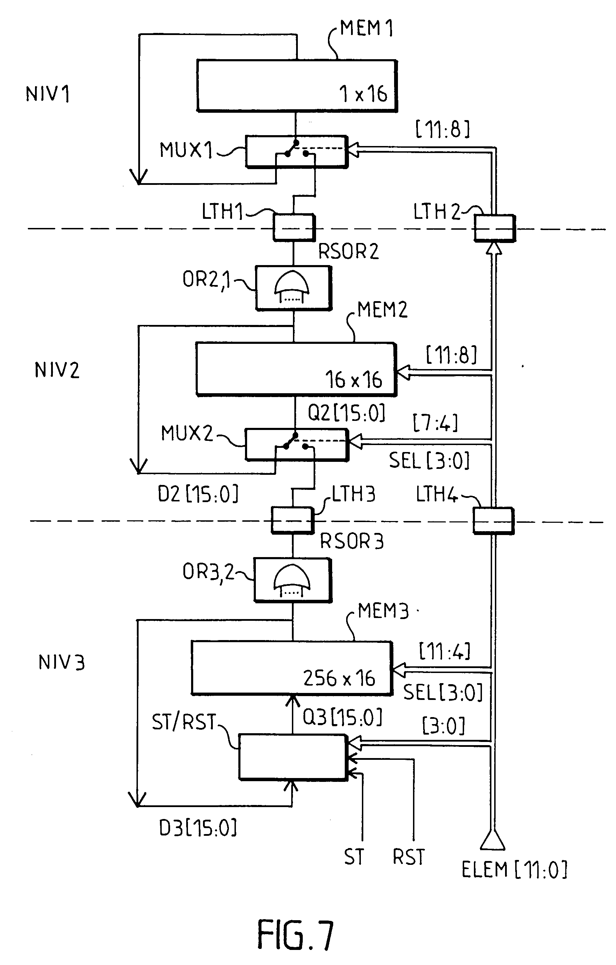

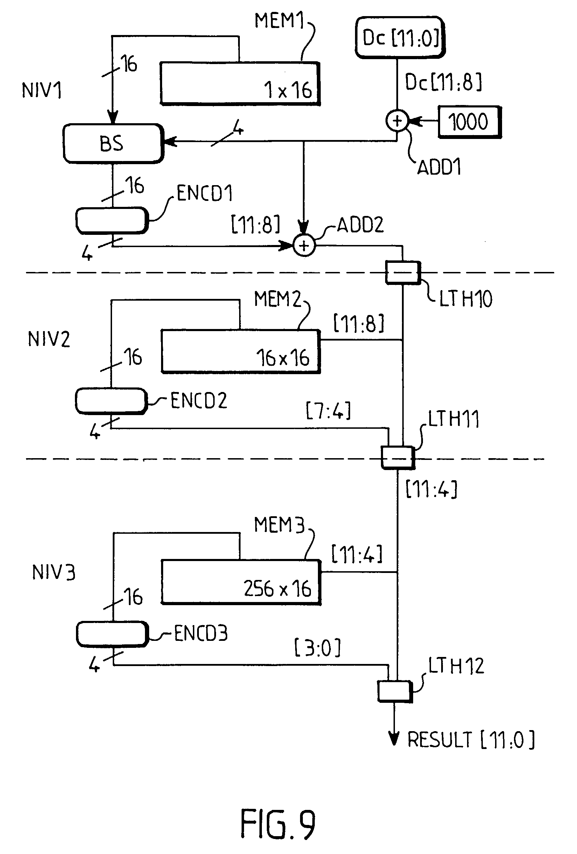

Comme deux types d'opérations sont effectués sur l'arbre, on a décomposé, pour l'explication, ce dispositif en deux montages distincts pour des raisons de clarté : un montage pour l'insertion et un autre pour la recherche. Bien sûr, en pratique, ils sont superposés et demandent l'introduction d'un multiplexeur au niveau de l'adresse des mémoires, positionné en fonction de la "phase" courante. Les figures 7 et 9 montrent donc respectivement le montage pour l'insertion et le montage pour la recherche.

Il faut noter qu'il est possible de faire plusieurs insertions par temps cellule. Par contre, il n'est opéré qu'une seule recherche par temps cellule. Des insertions et une recherche peuvent être exécutées simultanément. L'accès à la mémoire comporte 4 "phases" : trois sont dédiées à l'insertion et une est réservée à la recherche.

### Montage d'insertion (fig.7).

Il est élaboré autour de trois mémoires MEM1, MEM2 et MEM3 affectées respectivement auxdits niveaux NIV1, NIV2 et NIV3. Ces mémoires sont organisées en mots de 16 bits correspondant auxdits groupements. La mémoire MEM1 en comporte un seul, la mémoire MEM2 seize et la mémoire MEM3 deux cent cinquante six. La première opération dans le processus d'insertion consiste à activer ou désactiver un bit dans la mémoire MEM3 du niveau NIV3 et à mettre à jour les bits relatifs aux groupements auxquels ils appartiennent, dans les mémoires de niveaux NIV2 et NIV1.

Lors d'une insertion, d'une part le numéro de bit ELEM défini par 12 bits, ce qui est indiqué par [11:0] sur la figure et d'autre part, le type d'insertion (Activation: ST, Désactivation: RST) sont présentés à la base de l'arbre.
La syntaxe d'insertion est la suivante :
Ins(élément, set, reset)
où set et reset sont des booléens, l'absence des deux signifie qu'aucune opération n'est effectuée.

Séquencement :

Les 8 bits de poids forts [11:4] de ELEM sont envoyés sur la mémoire MEM3, le mot adressé (appelé D3[15:0]) est lu et envoyé sur le bloc ST/RST, lequel reçoit également les 4 bits de poids faibles [3:0] de ELEM ainsi que les booléens set, reset. Les poids faibles des liaisons entre niveaux sont aussi représentés par SEL[3:0]. En sortie, le bloc ST/RST positionne actif (set=VRAI) ou inactif (reset=VRAI) le bit désigné par SEL[3:0] dans le mot lu de la mémoire. Le mot résultant (appelé Q[15:0]) est alors écrit dans la mémoire.
La structure de ce bloc ST/RST se déduit de l'équation logique suivante :
Cette équation porte sur chaque bit n (0 =< n =< 15)
Qn = ( (set == VRAI) ET (n == SEL[3:0]) )
OU ( Dn ET NOT ( (reset == VRAI) ET (n == SEL[3:0]) ) ).
Le même mot résultant est lu à nouveau et un OU logique est effectué par un bloc OR3,2 entre tous les bits. Le résultat RSOR3 est fourni à l'étage de niveau supérieur NIV2.
Au niveau 2 (NIV2), le champ [11:8] de ELEM est envoyé sur la mémoire MEM2 pour adresser un des seize mots de seize bits. Le mot adressé (appelé D2[15:0]) est lu et envoyé sur un bloc MUX2, lequel reçoit également les 4 bits de poids intermédiaires [7:4] de "élément" (appelé SEL[3:0] car ce sont les élément de poids faibles de la liaison au niveau NIV2) ainsi que le résultat de l'étage précédant RSOR3. En sortie, le bloc MUX2 positionne actif (RSOR3=VRAI) ou inactif (RSOR3=FAUX) le bit désigné par SEL[3:0] dans le mot lu de la mémoire. Le mot résultant (appelé Q2[15:0]) est alors écrit dans la mémoire. La structure du bloc MUX2 se déduit de l'équation logique suivante :

L'équation sur un bit 'n' (0 =< n =< 15) est la suivante :

Qn = ( (ResOR == VRAI) ET (n == SEL[3:0]) )

OU ( Dn ET NOT ( (ResOR == FAUX) ET (n == SEL[3:0]) ) ).

Le même mot résultant est lu à nouveau et un OU logique est effectué entre tous les bits par un bloc OR2,1. Le résultat RSOR2 est fourni à l'étage de niveau supérieur NIV1.

Le niveau NIV1 subit un traitement identique au niveau NIV2.

Différents registres LTH1 à LTH4 intercalés entre les niveaux permettent un fonctionnement en pipe-line.

## Montage de recherche (fig.9).

La recherche consiste à trouver le premier bit actif dans la mémoire de niveau 3 compte tenu de la date courante. La syntaxe de la recherche est donc la suivante :

Res = Recherche()

L'influence de la date courante est illustrée à l'aide de la figure 8. On a représenté sur cette figure l'évolution de la date courante sur la Table des dates-butées ou de la mémoire du niveau 3 de l'arbre. On remarquera que l'axe des temps "t" est orienté de la droite vers la gauche. Les dates positives sont marquées par un "+" et les négatives par un "-". La date la plus positive est marquée "P" et la plus négative "N".

On voit immédiatement que l'élection du premier bit à 1 dans la mémoire de niveau 3, en partant de la date la plus négative vers la plus positive prend en compte la date courante. Pour cela, il faut opérer une rotation à droite des bits pour amener le bit représentant la date la plus négative la plus à droite par exemple. On effectue une recherche sur le bit actif le plus à droite. Cette opération peut être opérée à chaque étage de l'arbre.

Cette fonction de rotation est effectuée par un bloc BS montré à la figure 9. Ce bloc BS est un dispositif appelé BARREL SHIFT bien connu de la technique. Comme cette fonction de rotation est assez coûteuse en nombre de transistors, elle est limitée au seul niveau NIV1. Il faut cependant veiller à ce que les dates positives ne soient pas supérieures aux 7/8 de la plage "positive", ce qui limite indirectement la plus faible valeur de débit gérée par le dispositif. Les bits passent alors par "paquet" de 4096/16 = 256 bits du domaine négatif au positif.

## Séquencement de la recherche :

La valeur de la mémoire du niveau 1 est lue. Chaque bit représente 256 bits au niveau des feuilles de l'arbre. D'un point de vue logique, ce bit est actif (à 1) si au moins un bit parmi les 256 est à 1.

Ce mot subit une rotation "Dn+1 => Dn" pour "amener" la plage négative le plus à droite, sur les poids faibles. Le bloc BS effectue cette opération.

Les 4 bits de poids forts de la date courante sont additionnés au moyen d'un additionneur ADD1 avec un décalage égal en binaire à "1000" (cela revient à inverser le bit de poids fort !) pour donner le nombre de rotations élémentaires d'un bit exécuté par le bloc BS. (Le ratio entre tailles de la plage positive et négative peut être modifié en ajustant le décalage. Ici, on a choisi des plages de taille identique). Le bloc ENCD1 reçoit le mot de 16 bits et élit le bit actif sur le poids le plus faible, c'est-à-dire celui représentant la date la plus petite. Le résultat tient sur 4 bits et est fourni au niveau NIV2 via un additionneur ADD2 qui ajoute le résultat de l'additionneur ADD1.

Le niveau NIV2 reçoit le résultat du niveau NIV1 et s'en sert comme adresse sur sa mémoire. Le mot adressé est lu et envoyé dans un bloc ENCD2 qui retourne à nouveau le numéro du premier bit à 1. Le résultat est alors concaténé sur les poids faibles au précédent pour être envoyé au niveau NIV3.

Le niveau NIV3 exécute un traitement analogue au niveau NIV2. Le résultat final RESULT[11:0] est disponible en sortie du niveau NIV3. Là aussi, on a prévu des registres LTH10 à LTH12 pour assurer un fonctionnement en pipe-line.

## Exemple :

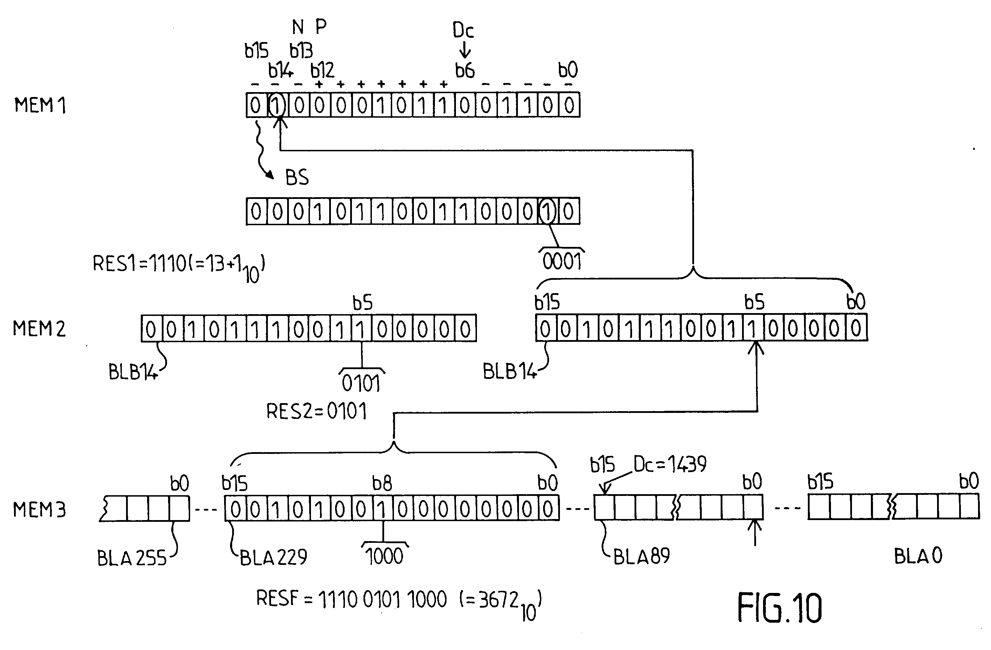

Pour mieux comprendre le fonctionnement du dispositif d'arborescence 394, on explicite l'exemple suivant avec l'aide de la figure 10.

Soit Dc = 0101 1001 1111 (=1439 en décimal).

Cette date correspond au bit 15 (b15) du groupement BLA89.

A ce bit correspond le bit b6 du groupement de la mémoire MEM1. Des dates passées et futures correspondent au bit b6. Les dates futures correspondent aux bits b7 à b12 et les dates passées de b5 à b0 et de b15 à b13. La date la plus positive correspond donc au bit b12, la date la plus négative, au bit b13. Chaque emplacement de cette mémoire MEM1 correspond à 256 emplacements mémoire de la mémoire MEM3.

La phase de recherche se déroule ensuite de la manière suivante.

Le bloc BS donne en sortie (0101+1000 = 1101 soit 13 décalages à droite) soit :
0001 0110 0110 0010.

Le bloc ENCD1 élit le premier bit à 1 soit b1 (0001).

A ce code on rajoute le nombre de décalages effectués par le bloc BS, de sorte qu'on obtient une premier résultat :
RES1 = 1101+0001 (= 13+1 en décimal) = 1110.

Il convient donc alors d'analyser le bloc BLB14 qu'on a dédoublé sur la figure pour des raisons de lisibilité.

Le contenu de ce groupement est par exemple :
0010 1110 0110 0000.

Le bloc ENCD2 élit le premier bit à 1 soit b5 (0101), d'où RES2 = 0101.

L'adresse 5 est émise sur MEM3 et MEM3 donne évidemment l'adresse du groupement BLA229. Ce groupement contient :
0010 1001 0000 0000.

Le bloc ENCD3 élit le premier bit à 1 soit b8 (1000). Le résultat final RESF est donc : 0001 0101 1000 sur 12 bits ( ≡ RESULT[11:0].

## DESCRIPTION DES FONCTIONS DU CALCULATEUR 385.

Comme déjà dit, le calculateur 385 dispose d'une table Table_desc indexée par le numéro de canal. Cette table contient l'adresse des descripteurs de canaux.

Le descripteur du canal est composé :

- du champ identificateur de canal (noté ID)
- d'un champ représentant la période ou gigue sur le canal ID (noté PERIODE)
- d'un pointeur sur un autre descripteur de canal (noté SUIVANT).

Les notifications arrivent au calculateur sous forme de paires (ID, Th) avec ID l'identificateur de canal et Th la date théorique d'émission.

La condition sine qua non pour un ID de sortir du dispositif d'espacement 300 (et donc d'être présenté au dispositif de lissage 302) est d'avoir sa date théorique passée. Pour des raisons de clarté, on considère que Th arrive sous forme d'une durée égale au nombre de temps cellule qui s'est écoulé entre la Date théorique d'émission et le moment où la notification est présentée (à la date courante Dc). La date maximale d'émission sur ID dite Date_Butée calculée par le calculateur devient donc :

$$\text{Date\_Butée} = Dc - Th + \text{Table\_desc}[ID] \rightarrow \text{PERIODE}.$$

Le traitement est maintenant décrit sous forme de pseudo-code.

```
début

variables locales id.Id.Th

Répéter

    si "nouveau temps cellule"

    alors id = recfunc()
    /* id résultat du dispositif*/

    sinon

        si "arrivée d'une notification (Id,Th)"

        alors

            insfunc(Id,Th)

        finsi
```

```
      finsi
fin répéter
fin


recfunc()
variables locales el,id,desc.
début
el = Recherche() /*résultat de recherche de l'arbre*/
desc = Table_dates_butées[el]/*extraction id de la chaîne*/
Table_dates_butées[el] = desc → SUIVANT/*mise à jour chaîne*/
si Table_dates_butées[el] = = 0 /* test chaîne devenue vide*/
alors
    lns(el,FAUX,VRAI) /*reset élément de l'arbre*/
finsi
id = desc → ID
retourner id /*résultat du dispositif*/
fin


Insfunc(id,th)
variables locales pid,el,desc
début
desc = Table_desc[id] /*descripteur de l'ID*/
pid = desc → PERIODE /*période butée associée à l'ID*/
el = Dc - Th + pid /*calcul adresse dans la table*/
si Table_dates_butées[el] = = 0 /*test chaîne vide*/
alors
    ins(el,VRAI,FAUX) /*set élément dans l'arbre*/
finsi
desc → SUIVANT = Table_dates_butées[el] /*mise en chaîne*/
Table_dates_butées[el] = desc /* mise en chaîne*/
fin
```

Il est à noter que le système de communication de l'invention s'adapte, sans sortir de son cadre, à des espacements de cellule plus sophistiqués. Par exemple, on peut tenir compte des notifications arrivant dans les files d'attente (organes 201$_i$). On pourra à ce sujet consulter la demande de brevet français No. 2 721 777 déposée sous le No. 94 07664.


**Revendications**

1. Système de communication formé :

7

- d'au moins un réseau du genre A.T.M., notamment, qui transmet d'un de ses points d'accès à un autre des cellules d'informations,
- et d'au moins un dispositif de multiplexage comportant :

  . une pluralité de bornes d'accès pour des utilisateurs ayant des cellules à transmettre, selon certaines exigences, sur une certaine connexion définie par un identificateur de connexion,
  . au moins une borne de raccord pour au moins un point d'accès dudit réseau pour fournir dans le réseau au plus une cellule par temps-cellule,
  . une pluralité de circuits de service affectés aux bornes d'accès, munis :

    • d'organes-tampons pour emmagasiner les cellules d'utilisateur pour un identificateur de connexion donné,
    • d'une commande d'émission de cellules pour rendre disponibles, sur des sorties de cellules, les cellules emmagasinées,

- un circuit d'affectation en agissant sur ladite commande d'émission pour déterminer la fourniture, à ladite borne de raccord, d'au moins une cellule, comportant :

  . un compteur de date pour fournir une date courante à partir de laquelle ladite fourniture est établie,

système caractérisé en ce que le circuit d'affectation comporte en outre :

- des moyens pour établir des dates-butées pour chaque cellule à transmettre définie par un identificateur de connexion à partir desdites exigences,
- une table pour emmagasiner des identificateurs de connexions éventuellement chaînés, selon un espace d'adressage fonction de date-butées,
- un dispositif d'arborescence dont le nombre de feuilles correspond à l'espace d'adressage de ladite table pour emmagasiner un élément d'activation pour déterminer la présence d'identificateur pour tout l'espace d'adressage de ladite table.
- un circuit d'insertion pour insérer un identificateur de connexion,
- un circuit de recherche pour fournir l'adresse du ou des identificateurs de connexion en opérant sur le dispositif d'arborescence.

FIG.1

FIG. 2

FIG.3

EP 0 784 414 A1

FIG.4

FIG.8

EP 0 784 414 A1

394

| 1 | 0 | 0 | 1 | 0 | 1 | } |

| 0 | 1 | 0 | 0 | 0 | 1 | } |   | } | 0 | 1 | 0 | 0 | 0 | 0 | 1 | 0 | 0 | 1 | 0 | 1 | 0 | 0 | 0 |

392

| 0 | IDz | 0 | 0 | 0 | IDm | } |   | } | 0 | IDk | 0 | 0 | 0 | 0 | IDg IDh | 0 | 0 | ID | 0 | IDa IDb IDc | 0 | 0 | 0 |

E4095 ⌐                                                                              ⌐E3  ⌐E2  ⌐E1  ⌐E0

←————————————————— Dt

FIG.5

FIG.6

FIG.7

FIG.9

EP 0 784 414 A1

FIG.10

**Office européen des brevets**

# RAPPORT DE RECHERCHE EUROPEENNE

Numero de la demande

EP 97 20 0030

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | ISS '95. WORLD TELECOMMUNICATIONS CONGRESS. (INTERNATIONAL SWITCHIN SYMPOSIUM), ADVANCED SWITCHING TECHNOLOGIES FOR UNIVERSAL TELECOMMUNICATIONS AT THE BEGINNING OF THE 21ST. CENTURY BERLIN, APR. 23 - 28, 1995, vol. 1, 23 Avril 1995, VERBAND DEUTSCHER ELEKTROTECHNIKER (VDE) ET AL, pages 258-262, XP000495575 ROBERTS J W ET AL: "A REAL TIME SORTER WITH APPLICATION TO ATM TRAFFIC CONTROL" * page 259, colonne de droite, ligne 25 - page 261, colonne de gauche, ligne 20 * --- | 1 | H04Q11/04 H04L12/56 |
| D,A | EP 0 618 749 A (TRT TELECOM RADIO ELECTR ;PHILIPS NV (NL)) 5 Octobre 1994 * colonne 3, ligne 15 - colonne 4, ligne 35 * ----- | 1 | |
| | | | **DOMAINES TECHNIQUES RECHERCHES (Int.Cl.6)** H04L |

Le présent rapport a été établi pour toutes les revendications

| Lieu de la recherche | Date d'achèvement de la recherche | Examinateur |
|---|---|---|
| LA HAYE | 17 Avril 1997 | Veen, G |

EPO FORM 1503 03.82 (P04C02)